# EUROPEAN PATENT APPLICATION

(11) **EP 4 494 501 A1**
(43) Date of publication of application: **22.01.2025**
(21) Application number: 23814750.8
(22) Date of filing: 31.03.2023
(51) Int. Cl.: A24F 40/46, A24F 40/40, A24F 40/50

(54) **MICROWAVE HEATING ELECTRONIC ATOMIZATION APPARATUS, AND CONTROL METHOD AND APPARATUS THEREFOR**

(30) Priority: 01.06.2022 CN 202210614881
(71) Applicant: Hainan Moore Brothers Technology Co., Ltd., Hainan 571900 (CN)
(72) Inventor: CHEN, Bin, Chengmai, Hainan 571900 (CN); ZHOU, Hongming, Chengmai, Hainan 571900 (CN); LI, Rihong, Chengmai, Hainan 571900 (CN); LIU, Hongyi, Chengmai, Hainan 571900 (CN); YOU, Jun, Chengmai, Hainan 571900 (CN)
(74) Representative: Corradini, Corrado
(86) International application number: PCT/CN2023/085537
(87) International publication number: WO 2023/231554

(57) **Abstract**

A microwave heating electronic atomization apparatus (1), and a control method and control apparatus therefor. The control method comprises: when a microwave heating electronic atomization apparatus (1) performs microwave heating on an atomization medium, acquiring an output power and a reflection power of a current unit duration (S300); according to the output power and the reflection power of the current unit duration, calculating a power adjustment coefficient (S400); and, according to the power adjustment coefficient, optimizing the initial power of the next unit duration to obtain an output power of the next unit duration (S500). By means of measuring the reflection power of the current unit duration, the control method adjusts and optimizes the initial power of the next unit duration on the basis of the measured reflection power, thus achieving effective control of the microwave heating electronic atomization apparatus (1), and improving the control accuracy for the microwave heating electronic atomization apparatus (1).

## Description

### CROSS-REFERENCE TO RELATED APPLICATION

This application claims priority to Chinese patent application No. 2022106148810, filed on June 1, 2022 with the State Intellectual Property Office of China, the content of which is hereby incorporated by reference for all purposes.

### TECHNICAL FIELD

The present application relates to the technical field of heating without burning, and in particular to a microwave heating electronic atomization apparatus, and a control method and a control device therefor.

### BACKGROUND

The puff temperature of the heat-not-burn medium is generally in a lower range from 200 centigrade degrees to 350 centigrade degrees. In order to avoid a release of harmful components in the medium due to overheating, the temperature of the heat-not-burn atomizer needs to be accurately controlled. Existing heat-not-burn atomizers mostly adopt a resistive heating manner, and temperatures thereof are measured by thermocouples, and controlled by adjusting outputs of currents or voltages.

Microwave heating is a new heat-not-burn technology, and has the characteristics of overall heating, non-contact heating, and fast heating rate. In a microwave heating electronic atomization apparatus, if a temperature measurement is performed by a traditional thermal resistance manner, it is easy to be disturbed in the microwave field, and the heating cannot be controlled accurately. How to improve the accuracy of controlling the microwave heating electronic atomization apparatus is an urgent problem to be solved.

### SUMMARY

In view of the above problems, it is necessary to provide a microwave heating electronic atomization apparatus, and a control method and a control device therefor to improve the accuracy of controlling the microwave heating electronic atomization apparatus.

In a first aspect, a control method for a microwave heating electronic atomization apparatus is provided, and the control method includes:
obtaining an output power and a reflected power of a current unit duration when the microwave heating electronic atomization apparatus performs microwave heating on an atomization medium;
calculating a power adjustment coefficient according to the output power and the reflected power of the current unit duration; and
optimizing an initial power of the next unit duration according to the power adjustment coefficient to obtain an output power of the next unit duration, wherein the output power of the next unit duration is used for controlling the microwave heating performed by the microwave heating electronic atomization apparatus on the atomization medium in the next unit duration.

In one of the embodiments, calculating the power adjustment coefficient according to the output power and the reflected power of the current unit duration includes: calculating a ratio of the reflected power to the output power of the current unit duration to obtain a power ratio; and calculating the power adjustment coefficient based on the power ratio.

In one of the embodiments, calculating the power adjustment coefficient based on the power ratio includes: determining the corresponding power adjustment amplitude according to the numerical interval of the power ratio; and obtaining the power adjustment coefficient according to the power adjustment amplitude.

In one of the embodiments, the method further includes: controlling the microwave heating electronic atomization apparatus to stop working if the power ratio is greater than a preset threshold.

In one of the embodiments, the method further includes: controlling the microwave heating electronic atomization apparatus to stop working if it is detected that an interpuff interval of the microwave heating electronic atomization apparatus is greater than a set threshold.

In one of the embodiments, before obtaining the output power and the reflected power of the current unit duration when the microwave heating electronic atomization apparatus performs microwave heating on the atomization medium, the control method further includes:

determining an initial power of the microwave heating electronic atomization apparatus in each unit duration of a heat insulating session according to a preset power curve. The preset power curve provides power values of the microwave heating electronic atomization apparatus in different durations of a preheating session, of the heat insulating session, and of a temperature rising session.

In one of the embodiments, in the preset power curve, a power range of the preheating session is from 5W to 30W, a power range of the heat insulating session is from 0 to 20W, and a power range of the temperature rising session is from 5W to 30W.

In one of the embodiments, before determining the initial power of the microwave heating electronic atomization apparatus in each unit duration of the heat insulating session according to the preset power curve, the control method further includes: detecting a type of the atomization medium, and determining the preset power curve according to the type of the atomization medium; or receiving a power setting signal, determining the type of the atomization medium according to the power setting signal, and determining the preset power curve according to the type of the atomization medium.

In a second aspect, a control device for a microwave heating electronic atomization apparatus is provided, and includes:
a data obtaining module configured to obtain an output power and a reflected power of a current unit duration when the microwave heating electronic atomization apparatus performs microwave heating on an atomization medium;
a data processing module configured to calculate a power adjustment coefficient according to the output power and the reflected power of the current unit duration; and
a power optimizing module configured to optimize an initial power of the next unit duration according to the power adjustment coefficient to obtain an output power of the next unit duration, wherein the output power of the next unit duration is used for controlling the heating performed by the microwave heating electronic atomization apparatus on the atomization medium in the next unit duration.

In a third aspect, a microwave heating electronic atomization apparatus is provided, and includes a puff sensing device, a microwave heating device, a reflected-power detecting device, and a controller. The controller is connected to the puff sensing device, the microwave heating device and the reflected-power detecting device, and the controller is used for performing a microwave heating control according to any one of the methods above.

To achieve the related objectives above, one or more aspects of the present application include features that are fully described hereinafter and specifically cited in the claims. The following description and the accompanying drawings specifically set forth some exemplary aspects of the one or more aspects. However, these aspects only indicate some embodiments that adopt the principles described herein, and the described aspects are intended to cover all of these aspects and equivalent aspects thereof.

### BRIEF DESCRIPTION OF THE DRAWINGS

Illustrative and non-limiting embodiments of the present application are described with reference to the following drawings, and unless otherwise specified, similar reference signs throughout the drawings refer to similar elements.
FIG. 1 is a flow chart of a control method for a microwave heating electronic atomization apparatus according to an embodiment of the present application;
FIG. 2 is a flow chart of calculating a power adjustment coefficient based on an output power and a reflected power of a current unit duration according to an embodiment of the present application;
FIG. 3 is a flow chart of calculating a power adjustment coefficient based on a power ratio according to an embodiment of the present application;
FIG. 4 is a flow chart of the control method for the microwave heating electronic atomization apparatus according to another embodiment of the present application;
FIG. 5 is a block diagram showing a structure of a control device of a microwave heating electronic atomization apparatus according to an embodiment of the present application;
FIG. 6 is a schematic structural view of a microwave heating electronic atomization apparatus according to an embodiment of the present application.

### DETAILED DESCRIPTION OF THE EMBODIMENTS

In order to make the objectives, solutions and advantages of the present application clearer and better understood, the present application is further described in detail hereinafter in conjunction with the accompanying drawings and embodiments. It should be understood that the specific embodiments described herein are only used to explain the present application but not intended to limit the present application.

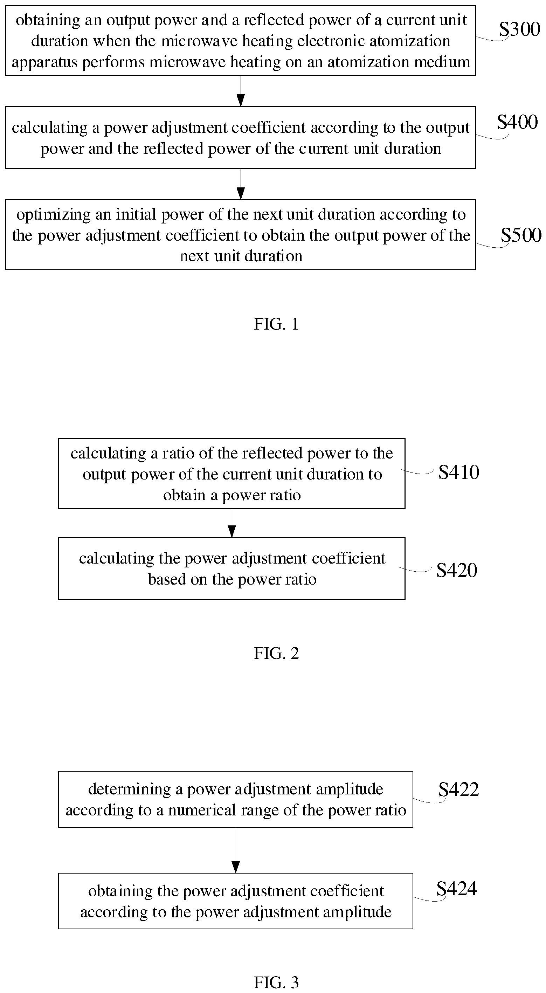

In an embodiment, as shown in FIG. 1, a control method for a microwave heating electronic atomization apparatus is provided, and the method includes steps S300 to S500.

In step S300, when the microwave heating electronic atomization apparatus performs microwave heating on an atomization medium, an output power and a reflected power of a current unit duration are obtained.

For example, a controller may be used to control the microwave heating device to output microwaves to heat the atomization medium. According to different actual needs, the heating process of the microwave heating electronic atomization apparatus may be divided into different sessions, and a corresponding reference power range may be set for each session. For example, according to a user's puffing action, the heating process of the microwave heating electronic atomization apparatus may be divided into a preheating session of a first puff of the user, a heat insulating session in each interpuff interval, and a temperature rising session during a puff. After a puff sensing device of the microwave heating electronic atomization apparatus detects a puff negative pressure, the controller controls the microwave heating apparatus to start working. In the preheating session and the temperature rising session, the controller controls the microwave heating according to pre-saved reference power ranges, respectively. In the heat insulating session in each interpuff interval, the heat insulating session is divided into a plurality of unit durations, and a corresponding initial power is set for each unit duration, and in different unit durations, the controller continuously controls the microwave heating apparatus to work to keep a held temperature in a stable temperature region. When the current unit duration is the first unit duration of the heat insulating session, the controller, using the preset initial power as the output power, controls the microwave heating apparatus to perform the microwave heating. When the current unit duration is the second or any subsequent unit duration of the heat insulating session, the controller controls the microwave heating device to perform microwave heating according to the output power optimized in the current unit duration. During the microwave heating, the reflected power in the current unit duration is detected by a reflected-power detecting device and fed back to the controller.

It may be understood that the value of the unit duration may be set according to actual applications. For example, the unit duration may be 1 ms or any other duration, and the minimum resolution of the unit duration may be from 1 µs to 1 second. In addition, in other embodiments, the heating process of the microwave heating electronic atomization apparatus may be divided into other different sessions, and the microwave heating is controlled based on multiple unit durations in one or more sessions.

In step S400, a power adjustment coefficient is calculated according to the output power and the reflected power of the current unit duration.

Specifically, after obtaining the output power and the reflected power of the current unit duration, the controller determines the power adjustment coefficient used for optimizing the initial power of a next unit duration, according to a ratio of the reflected power to the output power in the current unit duration, thereby adjusting an actual output power of the microwave heating electronic atomization apparatus based on the determined power adjustment coefficient. Alternatively, the controller may also determine the power adjustment coefficient of the next unit duration according to the reflected power and the output power of the current unit duration by using any other algorithm.

In step S500, the initial power of the next unit duration is optimized according to the power adjustment coefficient to obtain the output power of the next unit duration.

The output power of the next unit duration is used for controlling the heating performed by the microwave heating electronic atomization apparatus on the atomization medium in the next unit duration. Specifically, after calculating the power adjustment coefficient, the controller may multiply the initial power of the next unit duration by the power adjustment coefficient to obtain the output power of the next unit duration, that is: *Pnn* = *K* × *Pn,* where, *n* ≥ 2, *K* denotes the power adjustment coefficient, *Pn* denotes the initial power of the n-th unit duration, and *Pnn* denotes the output power of the n-th unit duration. When the next unit duration of the heat insulating session starts, the controller controls the microwave heating device to perform the microwave heating according to the calculated output power. It may be understood that in other embodiments, the controller may also determine the output power of the next unit duration by other methods according to the power adjustment coefficient. By detecting the output power and the reflected power in real time during the heating process, the real-time power required by the atomization medium in the heating process may be calculated. Therefore, by detecting and feeding back the reflected power, the output power may be controlled and adjusted in real time to achieve an effective control for the puff process of the microwave heating electronic atomization apparatus.

In the control method for the microwave heating electronic atomization apparatus, the reflected power of the current unit duration is detected, and the initial power of the next unit duration is adjusted and optimized based on the detected reflected power, thus achieving an effective control for the microwave heating electronic atomization apparatus and improving the control accuracy of the microwave heating electronic atomization apparatus.

In an embodiment, as shown in FIG. 2, step S400 includes step S410 and step S420.

In step S410, a ratio of the reflected power to the output power of the current unit duration is calculated to obtain a power ratio. After obtaining the output power and the reflected power of the current unit duration, the controller calculates the ratio of the reflected power to the output power and obtains the power ratio.

In step S420, the power adjustment coefficient is calculated based on the power ratio. Similarly, taking the example that the controller multiplies the initial power of the next unit duration by the power adjustment coefficient to obtain the output power of the next unit duration, the controller may save a corresponding relationship between power ratios and power adjustment coefficients in advance. When the power adjustment coefficient is being determined based on the power ratio, the larger the power ratio means that the more microwave power is not absorbed by the atomization medium, then the smaller the power adjustment coefficient may be set, that is, the larger the adjustment amplitude of the output power of the next unit duration is. After the actual power ratio of the current unit duration is calculated, the power adjustment coefficient for the power optimization of the next unit duration may be determined based on the actual power ratio and the pre-saved corresponding relationship, so that the output power of the microwave heating electronic atomization apparatus can meet actual needs.

Further, in an embodiment, as shown in FIG. 3, step S420 includes step S422 and step S424.

In step S422, a corresponding power adjustment amplitude is determined according to a numerical range of the power ratio. Specifically, the corresponding relationship between different numerical ranges and the power adjustment amplitudes may be established in advance. After calculating the power ratio, the controller determines the numerical range where the power ratio is located, and then determines the corresponding power adjustment amplitude.

In step S424, a power adjustment coefficient is obtained according to the power adjustment amplitude. The power adjustment coefficient *K* may be calculated by different methods according to different manners of determining the power adjustment amplitude. If the power adjustment amplitude increases with the increase of the power ratio, the power adjustment coefficient decreases with the increase of the power adjustment amplitude; if the power adjustment amplitude decreases with the increase of the power ratio, the power adjustment coefficient increases with the increase of the power adjustment amplitude.

It may be understood that the corresponding relationship between the numerical range and the power adjustment amplitude is nonunique and may be adjusted according to actual needs. In an embodiment, when a ratio of the reflected power *Pr* to the output power P is less than 0.1, the output power remains unchanged, and the power adjustment coefficient *K =* 1, that is, *Pnn = Pn* (where n≥2). When the ratio of the reflected power *Pr* to the output power P is greater than or equal to 0.1 and less than 0.2, the actual output power is reduced by 15%, and the power adjustment amplitude is 0.15, and *K =* 1 - 0.15 = 0.85, that is, *Pnn* = 0.85 × *Pn.* When the ratio of the reflected power *Pr* to the output power P is greater than or equal to 0.2 and less than 0.3, the actual output power is reduced by 25%, and the power adjustment amplitude is 0.25, and *K =* 1 - 0.25 = 0.75, that is, *Pnn* = 0.75 × *Pn.* When the ratio of the reflected power *Pr* to the output power P is greater than or equal to 0.3 and less than 0.4, the actual output power is reduced by 35%, and the power adjustment amplitude is 0.35, and *K* = 1 - 0.35 = 0.65, that is, *Pnn* = 0.65 × *Pn.* When the ratio of the reflected power *Pr* to the output power P is greater than or equal to 0.4 and less than 0.5, the actual output power is reduced by 45%, and the power adjustment amplitude is 0.45, and *K =* 1 - 0.45 = 0.55, that is, *Pnn* = 0.55 × *Pn.*

In addition, in an embodiment, the method further includes: if the power ratio is greater than a preset threshold, the microwave heating electronic atomization apparatus is controlled to stop working to prevent the reflected power from being too large to damage the microwave heating device. The value of the preset threshold is nonunique. For example, in this embodiment, the preset threshold may be set to be 0.5. When the ratio of the reflected power *Pr* to the output power P is greater than or equal to 0.5, the controller controls the microwave heating device to stop outputting microwaves, and the microwave heating electronic atomization apparatus stops working.

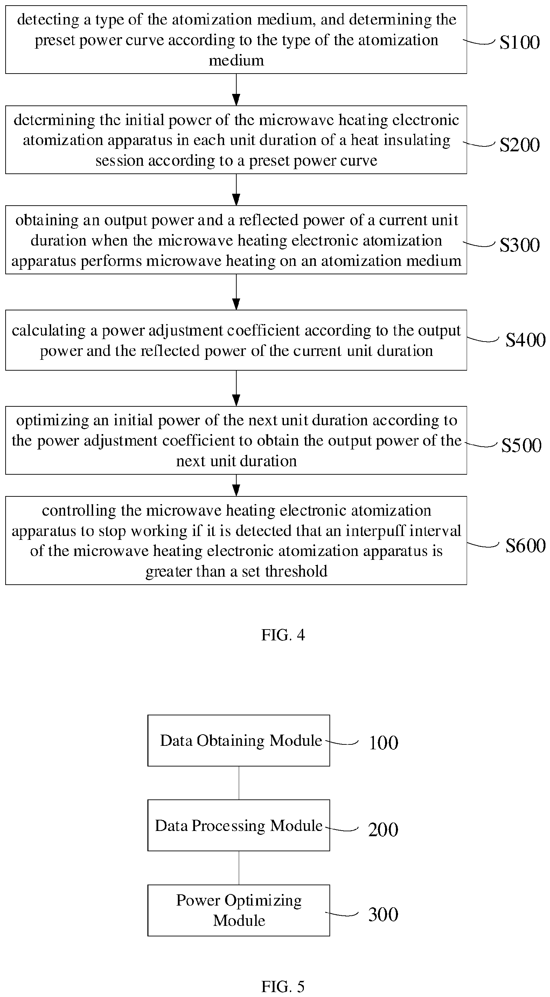

In an embodiment, as shown in FIG. 4, the method further includes step S600. In step S600, if it is detected that the interpuff interval of the microwave heating electronic atomization apparatus is greater than a set threshold, the microwave heating electronic atomization apparatus is controlled to stop working. A detailed value of the preset threshold is nonunique and may be set according to actual needs. In this embodiment, the threshold may be set to 90 seconds. The controller may determine the puff duration of the user based on the puff negative pressure detected by the puff sensing device. In the heat insulating session of each interpuff interval, the controller monitors the change of reflected power, and adjusts the actual output power in real time. When it is detected that the interpuff interval of the user exceeds the set threshold, it may be determined that the user stops using the microwave heating electronic atomization apparatus. At this time, the controller controls the microwave heating device to stop outputting microwaves, thereby avoiding energy waste caused by continuous heating.

In addition, when the interpuff interval of the microwave heating electronic atomization apparatus is greater than the preset threshold, the method may further include a step of outputting a prompt information. Specifically, the microwave heating electronic atomization apparatus may further include an information prompting device connected to the controller. The type of the information prompting device is nonunique, and may be one or more of a display screen, an indicator light, and a speaker. When the interpuff interval of the microwave heating electronic atomization apparatus is greater than the preset threshold, the controller may also output the prompt information through the information prompting device to remind the user that the microwave heating electronic atomization apparatus stops working.

In an embodiment, continuing to refer to FIG. 4, before step S300, the method further includes step S200. In step S200, the initial power of the microwave heating electronic atomization apparatus in each unit duration of the heat insulating session is determined according to a preset power curve.

The preset power curve provides power values of the microwave heating electronic atomization apparatus in different durations of the preheating session, of the heat insulating session and of the temperature rising session. Specifically, the preset power curve incudes one or more different power curves that are set and matched according to different atomization mediums. The preset power curve includes different time/power values set by the microwave heating electronic atomization apparatus for the preheating session of the first puff, the heat insulating session in each interpuff interval, and the temperature rising session during a puff. In the preheating session, the heat insulating session and the temperature rising session, the controller controls the microwave heating according to the corresponding power data stored in the preset power curve. In the heat insulating session, the controller also optimizes and adjusts the preset power curve in real time based on the detected and fed back power to ensure the precise and stability of the control. The power ranges set in the preset power curve for different sessions may also be set according to actual conditions. In this embodiment, in the preset power curve, the power range of the preheating session is from 5W to 30W, the power range of the heat insulating session is from 0 to 20W, and the power range of the temperature rising session is from 5W to 30W.

Furthermore, in an embodiment, as shown in FIG. 4, before step S200, the method further includes step S100. In step S100, the type of the atomization medium is detected, and the preset power curve is determined according to the type of the atomization medium.

Specifically, the controller may save corresponding preset power curves according to various types of atomization mediums. The microwave heating electronic atomization apparatus may also include a medium detecting device connected to the controller. After the user accommodates the atomization medium in a medium insertion port of the microwave heating electronic atomization apparatus, the type of the atomization medium is detected by the medium detecting device, and the detection result is fed back to the controller. The controller determines the corresponding preset power curve according to the detection result. The detecting methods of the medium detecting device for detecting the type of the medium is nonunique. The medium detection may be realized by various methods, such as a dielectric property detection and identification of the atomization medium, a QR code recognition, and a specific identification plate recognition.

In another embodiment, the method further includes: receiving a power setting signal, determining the type of the atomization medium according to the power setting signal, and determining the preset power curve according to the type of atomization medium. In this embodiment, the power setting signal may be manually inputted, and the controller determines the corresponding type of the medium according to the received power setting signal, thereby selecting the preset power curve. The method of inputting the power setting signal to determine the type of atomization medium is nonunique, and may be, for example, pressing a start button twice quickly corresponding to a medium A, pressing the start button three times quickly corresponding to a medium B, and pressing the start button once long and then pressing the start button once short corresponding to a medium C, etc.

In order to better understand the control method for the microwave heating electronic atomization apparatus, the electronic atomization apparatus is taken as an example for detailed description hereinafter.

The microwave heating is a form of electromagnetic wave radiation heating. The conventional and widely used temperature measurement through a thermal resistor is easily disturbed in the microwave field, thus resulting in signal interference, inaccurate temperature measurement, and even phenomenon of thermal resistor heating or igniting to conduct wave. Not only can the temperature not be accurately measured, but also the stability of the microwave field and the normal use of the device are affected. Therefore, other appropriate temperature control methods are required. The existing temperature control method for the microwave heat-no-burn medium is performed by using a preset power-time curve. However, the adaptability of the power curve has great uncertainty in an actual puff, thus resulting in large temperature fluctuations and difficulty in ensuring consistency of the taste of puffs.

Based on the above research, for the purpose of overcoming the disadvantages of the prior art, the present application provides a control method for a microwave heating electronic atomization apparatus, which makes use of the characteristics of the microwave heating, solves the problems that temperature measurement performed by resistance is unstable and susceptible to be interfered under the condition of the microwave heating, and realizes a more accurate control for the microwave heating electronic atomization apparatus. What's more, the method can also effectively protect the normal and stable use of the microwave heating device.

Specifically, during the microwave heating, when the output microwave power cannot be completely absorbed by the heated material, a reflected power will be generated. An excessive reflected power will not only damage the solid-state microwave source to affect a service life thereof, but also cause unnecessary energy loss and increase energy consumption. By arranging a reflected power detecting device in the solid-state microwave source, the reflected power can be detected and fed back. The real-time power required by the medium in the heating process can be calculated and characterized by detecting the output power and the reflected power in real time. Correspondingly, the corresponding temperature of the heated material may be more accurately characterized. Therefore, the puff process of the microwave heating electronic atomization apparatus can be effectively controlled through detecting and feeding back the reflected power, and then controlling and adjusting the output power in real time through a certain algorithm logic.

The control method provided in the present application performs a control and an adjustment by using the preset power curve and by detecting the reflected power. During the puff, the change of reflected power during the puff is detected in real time, and then the controller adjusts the actual output power in real time according to the real-time reflected power and the ratio of the reflected power to the output power or according to other algorithms, and optimizes and adjusts the preset power curve in real time to ensure the precise and stability of the control.

The preset power curve includes one or more different power curves that are set and matched according to different atomization mediums. The selection of a specific preset power curve is achieved through the identification of different atomization mediums by the atomization apparatus. The atomization medium may be identified by the atomization apparatus through a dielectric property detection and identification of the atomization medium, a QR code recognition, or a specific identification plate recognition, etc.

The preset power curve includes time/power values set according to the preheating session of the first puff, the heat insulating session in each interpuff interval, and the temperature rising session during the puff. In the present application, the operating temperature of the microwave heating electronic atomization apparatus is from 100 centigrade degrees to 350 centigrade degrees. The puff time of each heat-not-burn atomization medium is from 120 seconds to 600 seconds, where the preheating session of the first puff is from 1 second to 10 seconds, and a duration after a puff and before a next buff is the heat insulating session, and a duration of each insulating session is from 10 seconds to 90 seconds. The process of each puff is a temperature rising session, and a duration of the temperature rising session is from 1 second to 5 seconds.

The microwave heating electronic atomization apparatus provided by the present application is provided with a puff sensing device, which can accurately sense the start and the end of each puff and feed them back to the controller. When the duration between two puffs exceeds 90 seconds, the microwave heating electronic atomization apparatus stops outputting a microwave and sends out a prompt information. The working output power of the microwave heating electronic atomization apparatus is in a range from 0 to 30W, and the power may be stepless adjustable from 0 to 30W, and the minimum adjustable unit is 0.1W. In order to improve the convenience of puffing, reduce a waiting time for puffing and realize a rapid atomization of the first puff, the power for the rapid temperature rising at the start is from 5W to 30W, and the preset power for the heat insulating is from 0 to 20W, and the preset power for the puff temperature rising is from 5W to 30W.

In the heat insulating session, the controller continuously outputs powers *P*1*, P*2 *,* ..., and *Pn* according to the preset initial power at time *t1*, *t2*, ... , and *tn,* to keep the held temperature in a stable temperature range, where the minimum resolution unit of the unit duration t may be from 1 µs to 1 second, and the held temperature is from 100 centigrade degrees to 250 centigrade degrees. In the actual working process, the controller adjusts and optimizes the preset initial power through the detection and the feedback of the reflected power, and outputs the preset initial power in the first unit duration *t*1 just after the heat insulation session starts. After the reflected power detecting device detects the reflected power *Pr1* of the initial output power *P*1*,* the controller calculates the ratio of reflected power (*Pr*1*)* to the output power (*P*1), and then determines the actual output power *P*22 of the next unit duration *t*2 according to the ratio, and then determines the actual output power *P*33 of the next unit duration *t*3 according to the ratio of the reflected power *Pr2* to the output power *P*22 of the unit duration *t*2, and continuously outputs the actual output powers *P*44*, P55,* ... , and *Pnn* of the unit durations *t*4*, t*5*,* ... , and *tn* in sequence.

Further, the actual output power *Pnn* of the next unit duration is determined according to the ratio of the reflected power (*Prn*) to the output power (*Pn*) of the current unit duration, and the determination method is *Pnn* = *K* × *Pn* , where *K* denotes a power adjustment coefficient, and a value thereof varies according to the ratio of the reflected power (*Prn*) to the output power (*Pn*)*,* and also varies according to the different components of the adapted atomization medium.

Further, the method for determining the actual output power is as follows: when the ratio of the reflected power *Pr* to the output power *P* is less than 0.1, the output power remains unchanged, and *Pnn* = *Pn* (where n≥2); when the ratio of the reflected power *Pr* to the output power *P* is greater than or equal to 0.1 and less than 0.2, the actual output power is reduced by 15%, and *K =* 1 - 0.15 = 0.85, that is, *Pnn* = 0.85 × *Pn;* when the ratio of the reflected power *Pr* to the output power P is greater than or equal to 0.2 and less than 0.3, the output power is reduced by 25%, and *K =* 1 - 0.25 = 0.75, that is, *Pnn* = 0.75 × *Pn;* when the ratio of the reflected power *Pr* to the output power P is greater than or equal to 0.3 and less than 0.4, the output power is reduced by 35%, and *K =* 1 - 0.35 = 0.65, that is, *Pnn* = 0.65 × *Pn;* when the ratio of the reflected power *Pr* to the output power P is greater than or equal to 0.4 and less than 0.5, the actual output power is reduced by 45%, and *K =* 1 - 0.45 = 0.55, that is, *Pnn =* 0.55 × *Pn;* when the ratio of the reflected power *Pr* to the output power *P* is greater than or equal to 0.5, the power output is stopped, and the microwave heating electronic atomization apparatus stops working.

The control method adjusts the actual output power in real time, according to the preset power curve and the detection and the feedback of the reflected power, and identifies different atomization mediums by identification to obtain different matched and preset power curves, and performs power controls in the preheating session of the first puff, in the heat insulating session in each interpuff interval, and in the temperature rising session during the puff separately, according to the preset power curve. Moreover, the corresponding power adjustment coefficient *K* is determined according to the ratio of the reflected power (Pr1) to the output power (P1) to adjust and optimize the preset power curve in real time, thereby effectively realizing a systematic control while improving the safety and the service life of the microwave heating electronic atomization apparatus.

Based on the same inventive concepts, a control device for a microwave heating electronic atomization apparatus for implementing the control method for the microwave heating electronic atomization apparatus above is also provided in the embodiments of the present application. The solutions provided by the device for solving the problem are similar to the solutions described in the above method, so for the specific limitations of one or more embodiments of the control device for the microwave heating electronic atomization apparatus provided hereinafter, the limitations of the control methods for the microwave heating electronic atomization apparatus above may be referred to, and will not be repeatedly described hereinafter.

In an embodiment, as shown in FIG. 5, a control device for a microwave heating electronic atomization apparatus is also provided, and the control device includes a data obtaining module 100, a data processing module 200, and a power optimizing module 300. The data obtaining module 100 is configured to obtain an output power and a reflected power of a current unit duration when the microwave heating electronic atomization apparatus performs microwave heating on an atomization medium. The data processing module 200 is configured to calculate a power adjustment coefficient according to the output power and the reflected power of the current unit duration. The power optimizing module 300 is configured to optimize the initial power of the next unit duration according to the power adjustment coefficient to obtain the output power of the next unit duration. The output power of the next unit duration is used for controlling the heating performed by the microwave heating electronic atomization apparatus on the atomization medium in the next unit duration.

In an embodiment, the data processing module 200 is further configured to calculate a ratio of the reflected power to the output power of the current unit duration to obtain a power ratio, and calculate a power adjustment coefficient according to the power ratio.

In an embodiment, the data processing module 200 is further configured to determine a corresponding power adjustment amplitude according to a numerical range of the power ratio, and obtain a power adjustment coefficient according to the power adjustment amplitude.

In an embodiment, the control device further includes an atomization control module, and the atomization control module is configured to control the microwave heating electronic atomization apparatus to stop working if the power ratio is greater than a preset threshold.

In an embodiment, the atomization control module is further configured to control the microwave heating electronic atomization apparatus to stop working when it is detected that an interpuff interval of the microwave heating electronic atomization apparatus is greater than a set threshold.

In an embodiment, the control device further includes a power setting module, and the power setting module is configured to determine an initial power of the microwave heating electronic atomization apparatus in each unit duration in the heat insulating session according to a preset power curve. The preset power curve provides power values of the microwave heating electronic atomization apparatus at different durations in the preheating session, the heat insulating session and the temperature rising session.

In an embodiment, the power setting module is further configured to detect a type of the atomization medium and then determine the preset power curve according to the type of the atomization medium.

For the specific limitations of the control device for the microwave heating electronic atomization apparatus, the limitations of the control methods for the microwave heating electronic atomization apparatus above may be referred to, and will not be repeatedly described hereinafter. Each module in the control device of the microwave heating electronic atomization apparatus may be implemented in whole or in part by software, hardware and a combination thereof. Each of the above modules may be embedded in or independent of a processor of a computer device in the form of hardware, or may be stored in a memory of the computer device in the form of software, so that the processor can call and execute the operations corresponding to each of the above modules.

In an embodiment, a microwave heating electronic atomization apparatus is further provided, and includes a puff sensing device, a microwave heating device, a reflected-power detecting device and a controller. The controller is connected to the puff sensing device, the microwave heating device and the reflected-power detecting device, and the controller is used for performing a microwave heating control according to the above method. Furthermore, the microwave heating electronic atomization apparatus also includes an information prompting device and a medium detecting device which are connected to the controller.

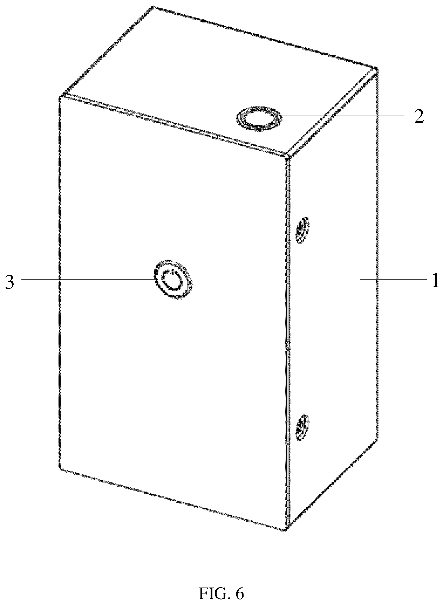

In addition, as shown in FIG. 6, the microwave heating electronic atomization apparatus 1 further includes a housing, and a medium insertion port 2 and a switch 3 which are arranged on the housing. The puff sensing device, the microwave heating device, the reflected-power detecting device, the medium detecting device, and the controller are all arranged inside the housing, and the information prompting device is visibly arranged on the housing. When the user presses the switch 3, the microwave heating electronic atomization apparatus 1 starts working, and enters the preheating session of the first puff after the puff sensing device detects that a puff negative pressure exists, and then in the heat insulating session in each interpuff interval, the output power is adjusted in real time according to a detected and fed back reflected power, so as to realize an effective control for the puff process of the microwave heating electronic atomization apparatus 1.

The technical features of the above-mentioned embodiments may be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present patent application. It should be understood by those of ordinary skill in the art that various modifications and improvements may be made without departing from the concept of the present application, and they all fall within the protection scope of the present application. Therefore, the patent protection of the present application shall be defined by the appended claims.

## Claims

1. A control method for a microwave heating electronic atomization apparatus, **characterized by** comprising:
obtaining an output power and a reflected power of a current unit duration when the microwave heating electronic atomization apparatus performs microwave heating on an atomization medium;
calculating a power adjustment coefficient according to the output power and the reflected power of the current unit duration; and
optimizing an initial power of the next unit duration according to the power adjustment coefficient to obtain an output power of the next unit duration, wherein the output power of the next unit duration is used for controlling the heating performed by the microwave heating electronic atomization apparatus on the atomization medium in the next unit duration.

2. The control method according to claim 1, wherein calculating the power adjustment coefficient according to the output power and the reflected power of the current unit duration, comprises:
calculating a ratio of the reflected power to the output power of the current unit duration to obtain a power ratio; and
calculating the power adjustment coefficient based on the power ratio.

3. The control method according to claim 2, wherein calculating the power adjustment coefficient based on the power ratio comprises:
determining a power adjustment amplitude according to a numerical range of the power ratio; and
obtaining the power adjustment coefficient according to the power adjustment amplitude.

4. The control method according to claim 2, further comprising:
controlling the microwave heating electronic atomization apparatus to stop working if the power ratio is greater than a preset threshold.

5. The control method according to claim 1, further comprising:
controlling the microwave heating electronic atomization apparatus to stop working if it is detected that an interpuff interval of the microwave heating electronic atomization apparatus is greater than a set threshold.

6. The control method according to any one of claims 1 to 5, wherein, before obtaining the output power and the reflected power of the current unit duration when the microwave heating electronic atomization apparatus performs microwave heating on the atomization medium, the control method further comprises:
determining an initial power of the microwave heating electronic atomization apparatus in each unit duration of a heat insulating session according to a preset power curve;
wherein, the preset power curve provides power values of the microwave heating electronic atomization apparatus in different durations of a preheating session, of the heat insulating session, and of a temperature rising session.

7. The control method according to claim 6, wherein, in the preset power curve, a power range of the preheating session is from 5W to 30W, a power range of the heat insulating session is from 0 to 20W, and a power range of the temperature rising session is from 5W to 30W.

8. The control method according to claim 6, wherein before determining the initial power of the microwave heating electronic atomization apparatus in each unit duration of the heat insulating session according to the preset power curve, the control method further comprises:
detecting a type of the atomization medium, and determining the preset power curve according to the type of the atomization medium; or
receiving a power setting signal, determining the type of the atomization medium according to the power setting signal, and determining the preset power curve according to the type of the atomization medium.

9. A control device for a microwave heating electronic atomization apparatus, **characterized by** comprising:
a data obtaining module configured to obtain an output power and a reflected power of a current unit duration when the microwave heating electronic atomization apparatus performs microwave heating on an atomization medium;
a data processing module configured to calculate a power adjustment coefficient according to the output power and the reflected power of the current unit duration; and
a power optimizing module configured to optimize an initial power of the next unit duration according to the power adjustment coefficient to obtain an output power of the next unit duration, wherein the output power of the next unit duration is used for controlling the heating performed by the microwave heating electronic atomization apparatus on the atomization medium in the next unit duration.

10. The control device according to claim 9, wherein the data obtaining module is further configured to:
calculate a ratio of the reflected power to the output power of the current unit duration to obtain a power ratio; and
calculate the power adjustment coefficient based on the power ratio.

11. The control device according to claim 10, wherein the data obtaining module is further configured to:
determine a power adjustment amplitude according to a numerical range of the power ratio; and
obtain the power adjustment coefficient according to the power adjustment amplitude.

12. The control device according to claim 10, further comprising:
an atomization control module configured to control the microwave heating electronic atomization apparatus to stop working when the power ratio is greater than a preset threshold.

13. The control device according to claim 9, further comprising:
an atomization control module configured to control the microwave heating electronic atomization apparatus to stop working if it is detected that an interpuff interval of the microwave heating electronic atomization apparatus is greater than a set threshold.

14. The control device according to any one of claims 9 to 13, further comprising:
a power setting module configured to determine an initial power of the microwave heating electronic atomization apparatus in each unit duration of a heat insulating session according to a preset power curve,
wherein, the preset power curve provides power values of the microwave heating electronic atomization apparatus in different durations of a preheating session, of the heat insulating session, and of a temperature rising session.

15. The control device according to claim 14, wherein, in the preset power curve, a power range of the preheating session is from 5W to 30W, a power range of the heat insulating session is from 0 to 20W, and a power range of the temperature rising session is from 5W to 30W.

16. The control device according to claim 14, wherein the power setting module is further configured to detect a type of the atomization medium, and determine the preset power curve according to the type of the atomization medium.

17. A microwave heating electronic atomization apparatus, **characterized by** comprising a puff sensing device, a microwave heating device, a reflected-power detecting device, and a controller, wherein the controller is connected to the puff sensing device, the microwave heating device and the reflected-power detecting device, and the controller is used for performing a microwave heating control according to the method of any one of claims 1 to 8.
